# EUROPEAN PATENT SPECIFICATION

(11) **EP 3 354 497 B1**
(45) Date of publication and mention of the grant of the patent: **22.04.2020**
(21) Application number: 16849123.1
(22) Date of filing: 27.04.2016
(51) Int. Cl.: B60G 21/04, B60G 11/18, B60G 3/14, B60G 21/02, B63B 1/14, B62D 9/02

(54) **"AFW" VEHICLE SUSPENSION (VARIANTS)**
»AFW -FAHRZEUGAUFHÄNGUNG (VARIANTEN)
SUSPENSION DE VÉHICULE « AFW » (ET VARIANTES)

(30) Priority: 22.09.2015 WO PCT/UA2015/000089; 22.04.2016 UA 201604500 U
(43) Date of publication of application: 01.08.2018
(73) Proprietor: Beylin, Georgiy Volodimirovich, Kyiv 02222 (UA); Petrenko, Sergiy Yuriiovich, Kiev 02222 (UA)
(72) Inventor: Beylin, Georgiy Volodimirovich, Kyiv 02222 (UA); Petrenko, Sergiy Yuriiovich, Kiev 02222 (UA)
(74) Representative: Sloboshanin, Sergej
(86) International application number: PCT/UA2016/000052
(87) International publication number: WO 2017/052486

(56) References cited:
- EP-A1- 2 311 670
- WO-A1-2006/016195
- DE-A1- 3 937 674
- DE-C- 964 747
- FR-A- 997 849
- FR-A- 1 337 204
- RU-C2- 2 473 444
- SU-A1- 1 518 149
- UA-U- 92 122
- UA-U- 92 122
- UA-U- 108 091
- US-A- 2 811 370
- US-A- 3 704 897
- US-A- 5 839 741
- US-B2- 8 317 208

## Description

The present inventions relate to structural components of vehicles, and more particularly to the suspension of both usual cars and special higher comfort vehicles, such as ambulances, baby carriages and wheelchairs, and also the suspension with catamaran floats according to the preamble of claim 1. The proposed suspension, which may be used in ground and water vehicles, is configured to enable automatic road clearance and body tilt adjustment depending on the condition of the roadway, sea roughness, the speed of the vehicle and the maneuver being performed.

The suspension according to the invention, when used in a catamaran structure, enables to significantly reduce the amplitude of rocking on waves compared to a catamaran of the prior art, and thus increase resistance to overturning and attain greater speeds of movement.

AFW is an abbreviation of the slogan: "always on four wheels".

Clearance or road clearance is the distance from the ground to the lowest point in the central part of a terrestrial vehicle. Under certain road speed and roadway condition, a motor vehicle steerability depends on the clearance value.

The suspension or spring system of a vehicle is a combination of parts, assemblies and mechanisms that play the role of a connecting link between the vehicle body and the road.

In the present application the motion parts are the wheels of the ground vehicle or floats of the vessels, i.e. catamarans.

In terms of a number of the essential features, the closest analogue of the present invention is a vehicle suspension comprising a frame, four identical arms intended to be connected with the hubs of the respective motion parts, and torsion bars attached to the frame through the bearing assemblies and connected to the arms of the corresponding motion parts, where at least two torsion bars may freely rotate with a twisting angle under the load of 1-5° and form, respectively, front and rear axis, the torsion bars are installed in parallel and their centers are kinematically connected to a connecting rod mounted in such a manner to allow synchronous axial rotation of the torsion bars, the arms of one axis are attached to the ends of the corresponding torsion bars and are installed in parallel, while the arms of each side of the suspension, i.e. right or left, are oriented in opposite directions [Patent for Utility Model No. 92122, Ukraine, IPC (2014.01) B60G 99/00; B60G 21/00; published: 25.07.2014, bul. # 14].

This design ensures a continuous, even distribution of the vehicle weight on all four wheels by maintaining a constant coefficient of traction with a roadway for all wheels, which, in the case of a small difference in heights of adjacent sections of the road (up to 15-20 cm), does not depend on the curvature of the roadway, and it also enables a body tilt in the direction of the turn during the movement, thus decreasing the likelihood of the vehicle skidding.

However, the described suspension does not provide the required smoothness and stability during movement, as it does not enable changing the clearance depending on the condition of the roadway and the speed of the vehicle. This statement is based on the fact that the length of the suspension arms is limited and depends on the wheelbase. In addition, the difference in the movement trajectories of one axis wheels may result in destabilization of the body position at high torque values. Also, in said suspension design, the connection of the wheels and the transmission is complicated.

Therefore, the present invention is based on the objective to provide such a suspension of a ground vehicle or catamaran that would provide increased stability and smoothness of movement of ground vehicles on highways, ordinary roads, and off-road conditions, as well as for catamarans on floats in the sea.

The objective of the suspension is attained due to the possibility of automatic adjustment of the ground vehicle's clearance, depending on the condition of the roadway, the speed of movement, and the height adjustment of a catamaran bridge above the water surface, depending on the sea roughness within 1-4 points, without change of the wheelbase of a ground vehicle or a catamaran float base, respectively, and the width of a vehicle by creating conditions for synchronous change in the mutual position of the arms connected with hubs of the corresponding motion parts, with the possibility of maintaining the total length of said arms within the vehicle dimensions.

Similar to a vehicle suspension of the prior art, the vehicle suspension according to the present invention comprises a frame, four identical arms intended to be connected with the hubs of the respective motion parts, and torsion bars attached to the frame through the bearing assemblies and connected to the arms of the corresponding motion parts, where at least two torsion bars may freely rotate with a twisting angle under the load of 1-5° and form, respectively, front and rear axis, the torsion bars are installed in parallel and their centers are kinematically connected to a connecting rod mounted in such a manner to allow synchronous axial rotation of the torsion bars, the arms of one axis are attached to the ends of the corresponding torsion bars and are installed in parallel, while the arms of each side of the suspension, i.e. right or left, are oriented in opposite directions, ***wherein*** the suspension according to the invention comprises at least four torsion bars disposed in pairs in a horizontal plane, and, additionally, the main and additional movable connection arms and linear actuators that are mounted in such a manner to allow synchronous change of their lengths, while the center of each torsion bar is connected to the connecting rod via an additional connection arm, which can freely rotate on the torsion bar, all additional connection arms are parallel, identically oriented and connected with each other by appropriate rods, and the arms of the corresponding motion parts of one axis are attached to the ends of the corresponding torsion bars, installed in parallel and oriented in opposite directions towards each other.

A feature of the suspension according to the present invention is that the connecting rod is provided with a mechanism for changing its length.

The suspension of the present invention is a multi-arm suspension designed to ensure an even distribution of the vehicle's weight among all four motion parts during its movement, while maintaining a constant coefficient of traction for all motion parts, where said coefficient does not depend on the curvature of the roadway or sea roughness and the suspension, in contrast to the suspension-prototype, has an adjustable clearance. Suspension can enable the body tilt while driving along the slope, at turns and at the time of passengers' exit.

In the variant of the suspension of the present invention, for the purpose of clearance adjustment an additional movable connection arm and a linear actuator are installed on each torsion bar. The connection rods are attached to the movable arms. Meanwhile, a stationary (relative to the torsion bar) connection arm is fixed to the torsion bar and forms an angle of 50°±10° with the wheel arm. The linear actuator is installed between the movable and stationary arms with the possibility to change their mutual position by rotating the corresponding torsion, and synchronous and identical changes of the length of the linear actuators automatically increase or decrease the suspension's clearance.

The vehicle suspension of the invention can be supplemented by a conventional steering mechanism.

For the purpose of reinforcement, the suspension may be designed according to a parallelogram principle by way of supplementing it with an additional arm.

In addition to the aforementioned, it should be noted that in a ground vehicle suspension of the prior art the sum of the arms lengths may not exceed 70% of the width of the vehicle due to the presence of the transmission and the width of the wheels. For the modern vehicles proportions (length to width ratios), the suspension according to the present invention allows to use the wheel arms with a total length equal to 110-130% of the vehicle width, which enables to increase the range of clearance adjustment.

Thus, the variant of the suspension of the invention allows tilts of the vehicle body while driving along the slope, at turns and at the time of passengers' exit.

The technical result obtained as a result of the implementation of the present invention is the possibility to automatically adjust the ground vehicle's clearance, depending on the condition of the roadway, the speed of movement, and to adjust height of a catamaran bridge above the water surface, depending on the sea roughness within 1-4 points, without change of the wheelbase of a ground vehicle or a catamaran float base, respectively, and the width of a vehicle by creating conditions for synchronous change in the mutual position of the arms connected with hubs of the corresponding motion parts, with the possibility of maintaining the total length of said arms within the vehicle dimensions.

The essence of the inventions is further explained by the drawings, where:
FIG. 1 is a kinematic diagram of the inventive suspension.
FIGs. 2 and 3 illustrates the process of tilting the vehicle body, suing the first variant of the suspension variant, to the right or to the left by changing the length of the connecting rod.
FIG. 4 shows the suspension with linear actuators in a ready-to-operate condition, where the arms of the front and rear axles are in a strictly horizontal position.
FIGs. 5, 12 show the suspension with longer wheel arms for increasing the clearance in order to enable the vehicle to overcome the obstacles.
FIG. 6 is a general view of the suspension.
FIGs. 7, 8 show individual elements of the suspension.
FIGs. 9, 10, 11 show the position of the additional connection arms of the suspension at different clearance values.
FIGs. 12, 13, 14 show the position of the additional connection arms of the suspension at different clearance values and with increased sizes of the wheel arms.
FIGs. 15, 16 show the process of overcoming obstacles by the vehicle with the suspension with different sizes of wheel arms.
FIG. 17 shows the first variant of the suspension for a vessel, i.e. a catamaran.

The variant of the vehicle suspension according to the present invention comprises a frame 1 with rubberized bearing assemblies 2 attached thereon, four torsion bars 3 with four arms 4 attached to them, four main connection arms 5, connecting rods 6 and 7, and four wheels 8. In the suspension, shock absorbers 9 may be installed for each wheel 8. The connecting rod 7 is equipped with a mechanism 10 for changing its length. For the purpose of clearance adjustment, the suspension is provided with additional movable connection arms 11, which are mounted in a manner to allow their free rotation on the torsion bar 3, as well as with linear actuators 12. Four identical wheel arms 4 are designed to connect to the hubs of the corresponding wheels 8. Torsion bars 3 are mounted in a manner to allow their free rotation with a twisting angle under a load of 1-5°, and they form, respectively, the front and rear axles. Torsion bars 3 are disposed in pairs in a horizontal plane. One end of each torsion bar 3 is connected by the arm 4 to the hub of the corresponding wheel 8 and the other end may freely rotate in the support on the frame 1. The center of each torsion bar 3 is connected to the connecting rod 7 via a main connection arm 5, which is freely rotatable on the torsion bar 3. All the main connection arms 5 are parallel and identically oriented. Each torsion bar 3 is provided with an additional movable connection arm 11 mounted in a manner to allow free rotation on the torsion bar 3 and with a linear actuator 12. The linear actuator 12 is mounted between the movable and stationary connection arms 11 with the possibility of changing the angle between them. The arms 4 of the wheels 8 of one axis are attached to the ends of the corresponding torsion bars 3, are installed in parallel and are oriented in opposite directions, towards each other. The connecting rod 7 is provided with a mechanism for changing its length 10, which is connected to a control unit (on-board computer) (not shown), or can be provided with a double-sided spring damper (not shown). A vehicle with the suspension of the proposed structure also comprises a control system including a control unit (on-board computer), acceleration and tilt sensors (not shown) connected to the corresponding inputs of the control unit, an also an actuator mechanism of the steering arm (not shown) connected to the output of the control unit.

When constructing a catamaran based on the vehicle suspensions according to the invention, four floats 13 are installed instead of four wheels 8.

The vehicle suspension operates as follows.

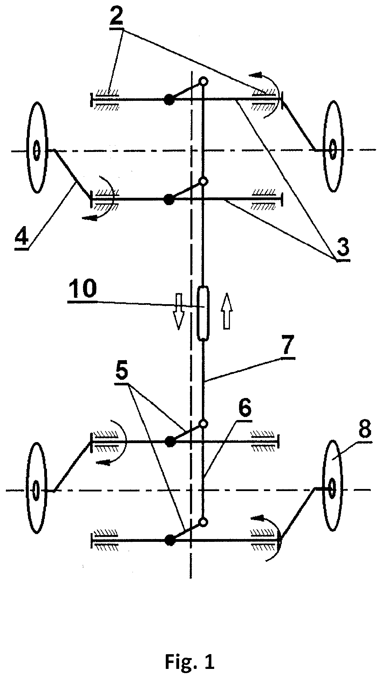

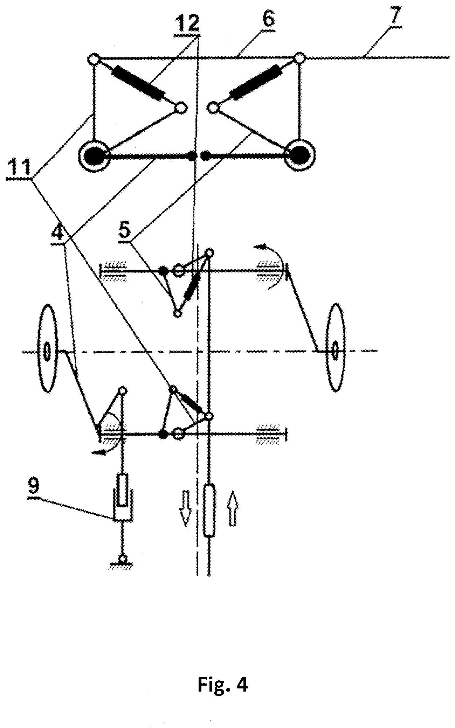

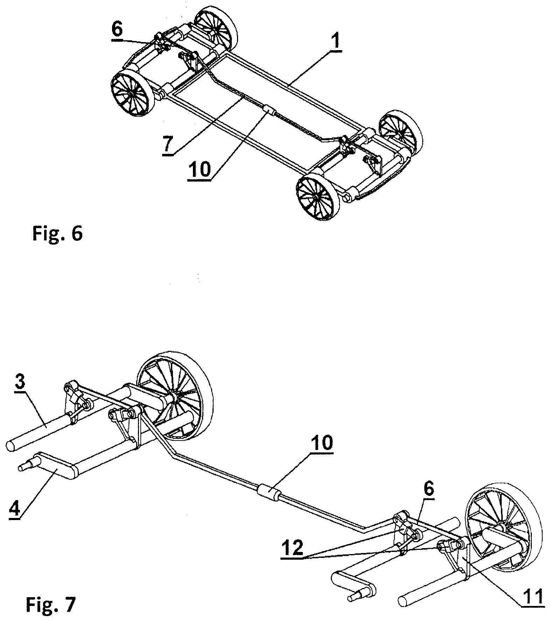

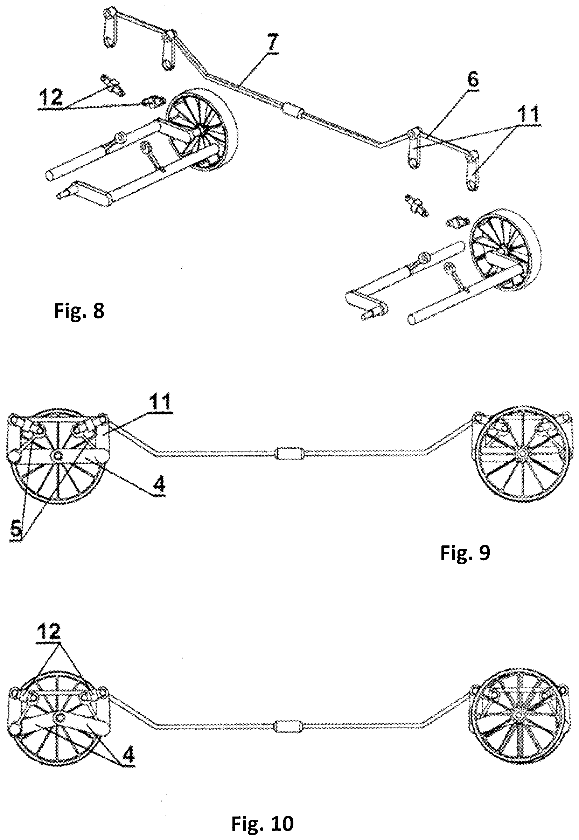

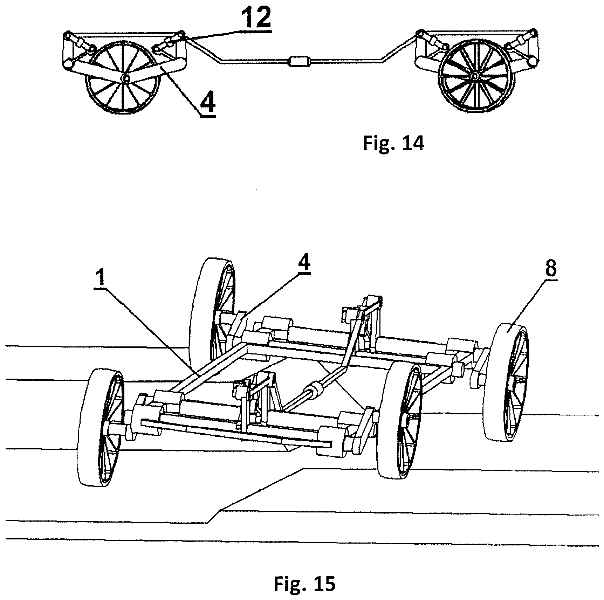

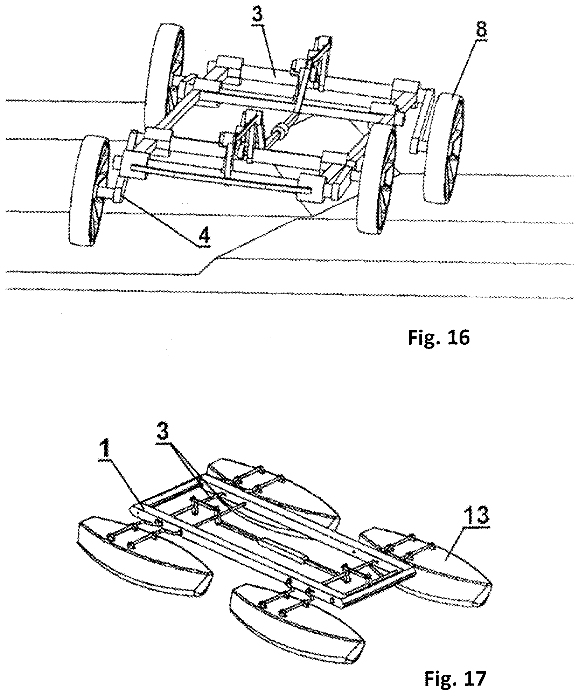

At the assembling stage, for proper operation of the suspension, all connection arms are installed in parallel and identically oriented either upward or downward, depending on the intended purpose of the suspension. In addition, the length of the connecting rod 6 is set such that the arms 4 of the front and rear axles occupy a horizontal position (FIG. 4). The torsion bars 3 (FIGs. 1, 7, 8) can freely rotate during the movement of the arm 4 when the wheel 8 of one axle rolls over an obstacle. Due to the rubberized bearing assemblies 2, rolling of wheel 8 of one axle on the obstacle results in change in the position of the main connection arms 5 connected by the connecting rod 7 and also in change of the spatial position of the frame 1, and therefore, due to gravity the vehicle suspension self-aligns and evenly distributes its weight among the four wheels 8, being four points of support. In this case, the frame 1 takes the position of the averaged plane for the four points of wheels 8 contact with the road (FIGs. 15, 16).

The authors have experimentally established that the performance of the suspension is maintained if the biggest difference in the heights of the installation of the wheels 8 does not exceed 0.7 times the sum of the arms 4 lengths. The suspension overcomes small obstacles due to axial twisting of torsion bars 3 with a small twisting angle of 1-5°.

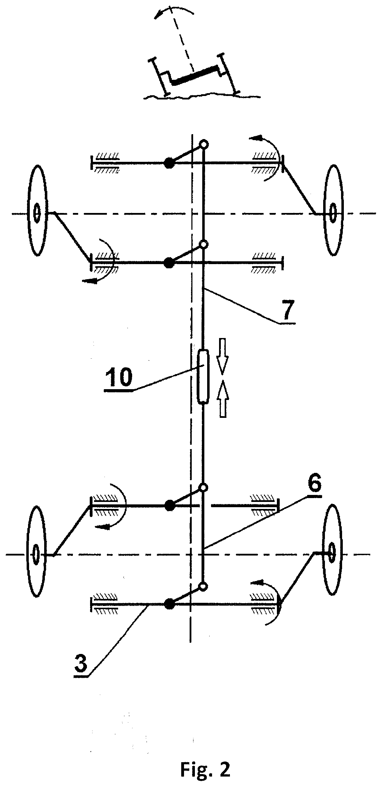

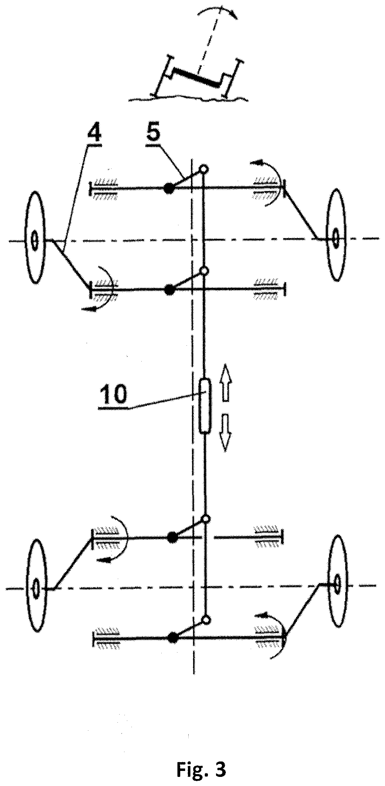

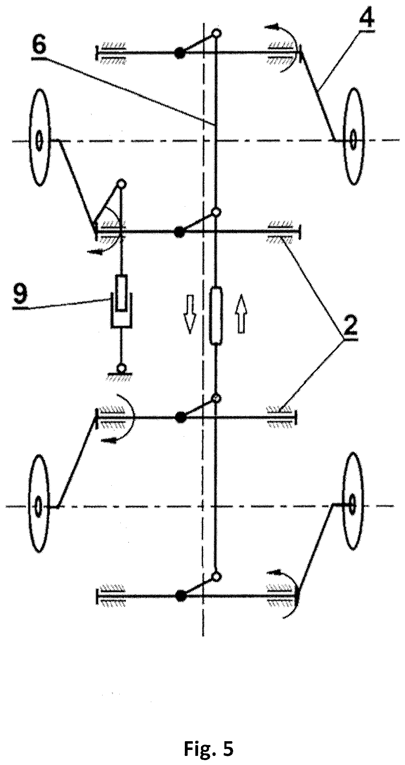

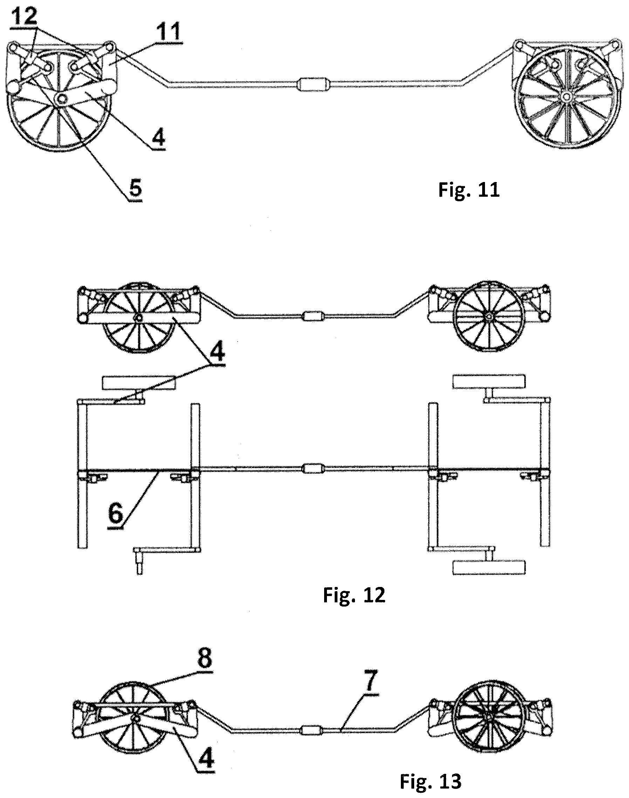

In addition, this suspension allows tilting a body in the direction of turn to prevent skidding. Thus, by changing the length of the connecting rod 7, it is possible to tilt the frame 1 with the vehicle body to the right or to the left (FIGs. 2, 3) to ensure contact with the surface of the road (ground) when moving along a slope, cornering, or when passengers enter or exit the vehicle. The tilt is effected by the mechanism of changing the length 10. The synchronous and identical change in the length of the linear actuators 12 alters the mutual position of the arms 4 and 11 thus, respectively, increasing or decreasing the suspension clearance (FIGs. 4, 9, 10, 11). To increase the clearance and the height of obstacles that the vehicle can overcome, the length of the arms 4 can be increased without changing the wheelbase (FIGs. 5, 12, 13, 14, 16).

The variant of the suspension according to the invention in a catamaran structure operates similar to a suspension of a ground vehicle. The change in clearance enables the vessel to overcome higher waves. The deck tilt during turns allows to prevent lateral sliding.

The vehicle suspension of the invention can be used in ambulances, baby carriages and wheelchairs, providing increased comfort and high reliability, since the puncture of one wheel 8 tire during the movement of the vehicle practically does not affect the steerability - the vehicle always stays on four wheels 8, which contact the road (ground).

Contacting the road (ground) with all four wheels 8 simultaneously with a uniform distribution of the vehicle weight is achieved without use of elastic elements, but only due to the gravity and kinematic connection of the suspension structural elements with each other.

List of items in the drawings:
1 - frame
2 - rubberized bearing assemblies attached to the frame
3 - torsion bars
4 - wheel arms
5 - main arms
6, 7 - connecting rods 6 and 7
8 - wheels
9 - shock absorbers of wheels
10 - mechanism for changing the length of the connecting rod 7
11 - additional movable arms
12 - linear actuators
13 - catamaran floats
14 - elastic coupling or rubber-strand torsion bar
15 - gear mechanism for changing the direction of rotation
16, 17 - linkage arms
18 - linear actuator for changing clearance
19 - longitudinal rod
20 - the mechanism for changing the length of the rod 19 - linear actuator.

## Claims

1. A vehicle suspension comprising
- a frame (1),
- four identical arms (4) intended to be connected with hubs of respective motion parts (8, 13), and
- torsion bars (3) attached to the frame (1) through bearing assemblies (2) and connected to the arms (4) of the corresponding motion parts (8, 13),
where
- at least two torsion bars (3) may freely rotate with a twisting angle under the load of 1-5° and form, respectively, front and rear axis,
- the torsion bars (3) are installed in parallel and their centers are kinematically connected to a connecting rod (7) mounted in such a manner to allow synchronous axial rotation of the torsion bars (3),
- the arms (4) of one axis are attached to the ends of the corresponding torsion bars (3) and are installed in parallel,
- while the arms (4) of each side of the suspension, i.e. right or left, are oriented in opposite directions,
**characterized in that** the suspension comprises
- at least four torsion bars (3) disposed in pairs in a horizontal plane, and,
- additionally,
- main (5) and additional (11) movable connection arms (5, 11) and
- linear actuators (12) that are mounted in such a manner to allow synchronous change of their lengths,
- while the center of each torsion bar (3) is connected to the connecting rod (7) via an additional connection arm (11), which can freely rotate on the torsion bar (3),
- all additional connection arms (11) are parallel, identically oriented and connected with each other by appropriate rods (6, 7), and
- the arms (4) of the corresponding motion parts (8, 13) of one axis are attached to the ends of the corresponding torsion bars (3), installed in parallel and oriented in opposite directions towards each other.

2. The vehicle suspension according to claim 1, *wherein* the connecting rod (7) is provided with a mechanism for changing its length.

## Patentansprüche

1. Fahrzeugaufhängung, umfassend
- einen Rahmen (1),
- vier identische Träger (4), die zum Verbinden mit Naben von entsprechenden beweglichen Teilen (8, 13) vorgesehen sind, und
- Torsionsstangen (3), die an dem Rahmen (1) über Radlagersätze (2) befestigt und mit den Trägern (4) der entsprechenden beweglichen Teile (8, 13) verbunden sind, wobei
- wenigstens zwei Torsionsstangen (3) mit einem Verdrehwinkel unter der Last von 1-5° frei rotieren können und eine Vorder- bzw. Hinterachse bilden,
- die Torsionsstangen (3) parallel montiert und ihre Mittelpunkte kinematisch mit einer Pleuelstange (7) verbunden sind, die so angebracht ist, dass eine synchrone axiale Rotation der Torsionsstangen (3) ermöglicht wird,
- die Träger (4) der einen Achse an den Enden der entsprechenden Torsionsstangen (3) befestigt und parallel montiert sind,
- während die Träger (4) jeder Seite der Aufhängung, d.h. rechts oder links, in gegensätzliche Richtungen ausgerichtet sind,
**dadurch gekennzeichnet, dass** die Aufhängung umfasst
- wenigstens vier Torsionsstangen (3), die paarweise in einer horizontalen Ebene angeordnet sind, und
- zusätzlich,
- Haupt- (5) und zusätzliche (11) bewegliche Verbindungsträger (5, 11) und
- Linearstellglieder (12), die derart montiert sind, dass eine synchrone Änderungen ihrer Längen möglich ist,
- während die Mittelpunkte jeder Torsionsstange (3) mit der Pleuelstange (7) über einen zusätzlichen Verbindungsträger (11) verbunden ist, der frei auf der Torsionsstange (3) rotieren kann,
- alle zusätzlichen Verbindungsträger (11) parallel, identisch ausgerichtet und über geeignete Stangen (6, 7) miteinander verbunden sind, und
- die Träger (4) der entsprechenden beweglichen Teile (8, 13) einer Achse an den Enden der entsprechenden Torsionsstangen (3) befestigt, parallel montiert und in entgegengesetzte Richtungen zu einander ausgerichtet sind.

2. Fahrzeugaufhängung nach Anspruch 1, *wobei* die Pleuelstange (7) mit einem Mechanismus zur Veränderung ihrer Länge versehen ist.

## Revendications

1. Suspension de véhicule comprenant
- un cadre (1),
- quatre bras (4) identiques destinés à être connectés aux moyeux des pièces en mouvement respectives (8, 13), et
- des barres de torsion (3) attachées au cadre (1) par des paliers (2) et connectées aux bras (4) des pièces en mouvement (8, 13) correspondantes,
où
- au moins deux barres de torsion (3) peuvent tourner librement avec un angle de torsion sous la charge de 1 à 5° et forment, respectivement, l'axe avant et arrière,
- les barres de torsion (3) sont installées en parallèle et leurs centres sont cinétiquement connectés à une bielle (7) montée de sorte à permettre une rotation axiale synchrone des barres de torsion (3),
- les bras (4) d'un axe sont attachés aux extrémités des barres de torsion (3) correspondantes et sont installées en parallèle,
- tandis que les bras (4) de chaque côté de la suspension, par exemple droite ou gauche, sont orientés dans des directions opposées,
**caractérisée en ce que** la suspension comprend
- au moins quatre barres de torsion (3) disposée par paire sur un plan horizontal, et,
- de plus,
- des bras de connexion mobiles (5,11) principaux (5) ou additionnels (11) et
- des vérins linéaires (12) qui sont montés de sorte à permettre un changement synchrone de leurs longueurs,
- tandis que le centre de chaque barre de torsion (3) est connecté à la bielle (7) via un bras de connexion additionnel (11), qui peut tourner librement sur la barre de torsion (3),
- tous les bras de connexion (11) sont parallèles, orientés à l'identique et connectés entre eux par des tiges (6,7) appropriées, et
- les bras (4) des pièces en mouvement (8, 13) correspondantes d'un axe sont attachés aux extrémités des barres de torsion correspondantes (3), installés en parallèle et orientés dans des directions opposées les uns face aux autres.

2. Suspension de véhicule selon la revendication 1, dans laquelle la bielle (7) est équipée d'un mécanisme pour changer sa longueur.
